# EUROPEAN PATENT APPLICATION

(11) **EP 1 890 476 A2**
(43) Date of publication of application: **20.02.2008**
(21) Application number: 07109861.0
(22) Date of filing: 08.06.2007
(51) Int. Cl.: H04N 5/16

(54) **Display apparatus and control method thereof**

(30) Priority: 18.08.2006 KR 20060078036
(71) Applicant: Samsung Electronics Co., Ltd., Suwon-si Gyeonggi-do (KR)
(72) Inventor: Choi, Young-hun, Suwon-si, Gyeonggi-do (KR)
(74) Representative: D'Halleweyn, Nele Veerle Trees Gertrudis

(57) **Abstract**

A display apparatus is provided. The display apparatus includes: a signal input part which receives a video signal; a signal processor which processes the video signal inputted through the signal input part according to a predetermined offset value; a controller which compensates the offset value of the signal processor to make the output black level equal to the standard black level if the output black level is not equal to the standard black level.

## Description

### CROSS-REFERENCE TO RELATED APPLICATIONS

This application claims priority from Korean Patent Application No. 2006-0078036, filed on August 18, 2006, the disclosure of which is incorporated herein by reference in its entirety.

### BACKGROUND OF THE INVENTION

### Field of the Invention

Apparatuses and methods consistent with the present invention relate to processing a video signal, and more particularly, to processing a video signal with 7.5 IRE (Institute of Radio Engineers).

### Description of the Related Art

A display apparatus processes a video signal to display an image on a display module if the video signal is inputted. The video signals may have a value of 7.5 IRE according to the type of video signal, and the display apparatus has to properly display an image according to the presence or absence of the video signal with a value of 7.5 IRE.

Herein, 7.5 IRE means that the video signal provides 7.5 % offset between a blanking level and a black level if it is prescribed that a brightness level of the video signal between the blanking level and a white level is classified as 100 IRE.

To provide 7.5% offset to the black level is called '7.5 IRE setup' or '7.5% setup'. Also, if offset is provided to the blanking level and the black level, and the offset to the blanking level and the offset to the black level are equal to each other, the offset is called `0 setup' or 'zero setup'. Generally, a National Television System Committee (NTSC) composite video signal and/or an S-Video signal have the value of 7.5 IRE.

The inputted video signal may have the value of 7.5 IRE according to the type of video signal. However, related art display apparatuses are unable to correctly determine whether the video signal has the value of 7.5 IRE or not.

In other words, the display apparatus may operate after determining that every video signal which is inputted either has the value of 7.5 IRE or does not have the value of 7.5 IRE. Accordingly, a contrast ratio may not be exactly reproduced and/or the brightness level of the video signal may not be correctly reproduced.

For example, if a video signal which does not have a value of 7.5 IRE is inputted into a display apparatus which automatically determines that every inputted video signal has a value of 7.5 IRE, the display apparatus determines the black level of the video signal as 7.5 IRE. Accordingly, the display apparatus displays the image of the video signal with a brightness level which is decreased at a data value corresponding to 7.5 IRE less than the brightness level of a video signal which has a value of 7.5 IRE, and which is processed after being inputted in the display apparatus. Therefore, the displayed image is substantially darker.

However, if a video signal with 7.5 IRE is inputted into a display apparatus which automatically determines that every video signal does not have a value of 7.5 IRE, the display apparatus determines that the video signal has a value of 0 IRE. Then, the image displayed on the display apparatus is substantially brighter.

### SUMMARY OF THE INVENTION

Exemplary embodiments of the present invention overcome the above disadvantages and other disadvantages not described above. Also, the present invention is not required to overcome the disadvantages described above, and an exemplary embodiment of the present invention may not overcome any of the problems described above.

The present invention provides a display apparatus and control method thereof, which correctly determines whether a video signal has a value of 7.5 IRE or not, and properly displays a brightness level of the video signal on the basis of the determination.

The foregoing and/or other aspects of the present invention can be achieved by a display apparatus, comprising: a signal input part which receives a video signal; a signal processor which processes the video signal inputted through the signal input part according to a predetermined offset value; a controller which compensates the offset value of the signal processor to make the output black level equal to a standard black level if the output black level is not equal to the standard black level.

According to an aspect of the present invention, the controller sets a determining block corresponding to a time block when a color signal in the video signal begins, compares the standard black level with the output black level outputted from the determining block, and compensates the offset value of the signal processor based on a result of comparing the output black level with the standard black level.

According to another aspect of the present invention, the signal processor comprises an analog to digital (A/D) converter and the controller compensates the offset value of the A/D converter.

According to another aspect of the present invention, the controller controls the signal processor to process a predetermined test video signal, sets the offset value of the A/D converter so that the output black level of the processed test video signal is equal to the standard black level.

The foregoing and/or other aspects of the present invention can be achieved by a control method of a display apparatus comprising: setting an offset value, and processing an inputted video signal according to the set offset value; and compensating the offset value so that the output black level is equal to a standard black level if the output black level is not equal to the on the basis of a comparison of the output black level and the standard black level.

According to another aspect of the present invention, the control method further comprises: comparing the standard black level with the output black level of the processed video signal to determine whether the standard black level is equal to the output black level of the processed video signal.

According to another aspect of the present invention, compensating the offset value comprises setting a determining block corresponding to a time block when a color signal in the video signal begins, comparing the standard black level with the output black level outputted from the determining block, and compensating the offset value based on the result of comparison.

According to another aspect of the present invention, setting the offset value comprises processing a predetermined test video signal, and setting the offset value so that the standard black level is equal to the processed output black level of the test video signal.

### BRIEF DESCRIPTION OF THE DRAWINGS

The above and/or other aspects of the present invention will become more apparent by describing in detail exemplary embodiments thereof, taken in conjunction with the accompanying drawings of which:
FIG. 1 is a control block diagram of a display apparatus according to an exemplary embodiment of the present invention;
FIG. 2 illustrates a video signal for testing according to an exemplary embodiment of the present invention;
FIG. 3 illustrates a part of a format of a composite video signal according to the exemplary embodiment of the present invention; and
FIG. 4 is a control flow chart of a display apparatus according to the principal concept of the present invention.

### DETAILED DESCRIPTION OF EXEMPLARY EMBODIMENTS OF THE INVENTION

Reference will now be made in detail to exemplary embodiments of the present invention, examples of which are illustrated in the accompanying drawings, wherein like reference numerals refer to like elements throughout. The exemplary embodiments are described below so as to explain the present invention by referring to the figures.

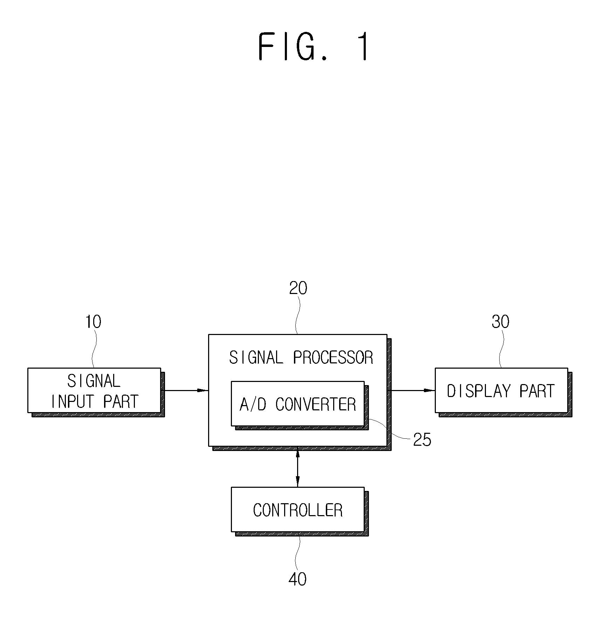

As shown in FIG. 1, a display apparatus comprises a signal input part 10, a signal processor 20, a display part 30 and a controller 40.

The signal input part 10 according to an exemplary embodiment of the present invention receives a video signal comprising a synchronizing signal and a color signal. The signal input part 10 may comprise a tuner (not shown) receiving a broadcasting signal comprising the video signal, and an external connection terminal (not shown) receiving the video signal from an external apparatus.

It is preferable, but not necessary, that the external connection terminal comprise connectors which have the capability to receive video signals of various types of formats. For example, the signal input part 10 comprises at least one of a D-Sub connector, a Composite Video Baseband Signal (CVBS) connector, an S-video connector, a composite connector and a component connector.

Hereinafter, the description will be given that the display apparatus according to the exemplary embodiments of the present invention receives and processes the composite video signal by way of example.

The signal processor 20 processes the video signal inputted through the signal input part 10 based on a control operation of the controller 40 to be described later, and outputs the processed video signal to the display part 30.

The signal processor 20 may comprise various functions corresponding to the format of the inputted video signal. For example, the functions may comprise a digital decoding function, a scaling function which adjusts a vertical frequency, a resolution, an aspect rate, etc. corresponding to an output standard of the display part 30 after receiving a digital video signal and/or an analog video signal and a predetermined format conversion function and so on.

As shown in FIG. 1, the signal processor 20 according to an exemplary embodiment of the present invention comprises an A/D converter 25 which receives the analog video signal inputted through the signal input part 10 and converts the analog video signal into the digital video signal.

The A/D converter 25 processes the video signal based on a predetermined offset value and a predetermined gain value so as to display the processed video signal on the display part 30. The offset value and the gain value may be set by the controller 40, and a detailed explanation will be presented later.

The display part 30 displays the video signal processed in the signal processor 20, and may comprise various types such as a Liquid Crystal Display (LCD), a Plasma Display Panel (PDP) and so on.

The controller 40 compares an output black level of the processed video signal with a standard black level, and compensates the offset value of the signal processor 20 so as to make the output black level equal to the standard black level. The controller 40 comprises a CPU, a microcomputer, etc.

Hereinafter, the description will be given that the display apparatus according to the exemplary embodiment of the present invention is set up as 0 IRE (0 set up) by way of example.

Specifically, the controller 40 controls the A/D converter 25 of the signal processor 20 to process the video signal based on the predetermined offset value if the video signal is inputted through the signal input part 10. The predetermined offset value is a standard to determine whether the video signal has a value of 7.5 IRE or not, and may be set by the controller 40.

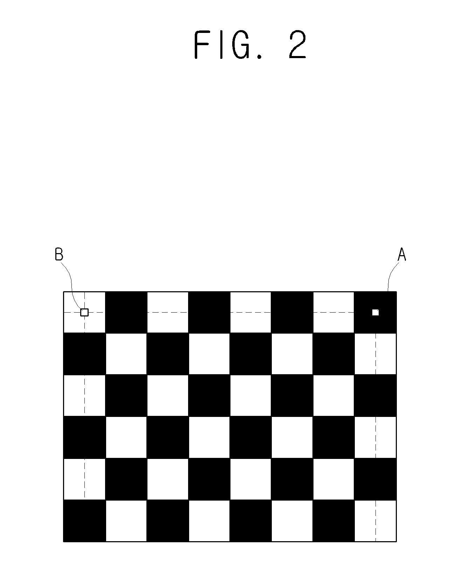

As shown in FIG. 2, the controller 40 may set the offset value by using a test video signal. In this case, the standard black level and a standard white level have to be set before the offset value and the gain value of the A/D converter 25 is set. The standard black level and the standard white level are output values of the video signal if the black level of the video signal has a value of 0 IRE and the white level of the video signal has a value of 100 IRE. Here, the standard black level and the standard white level may be set by a user.

As shown in FIG. 2, a part A of the test video signal corresponds to the black level of 0 IRE, and a part B of the test video signal corresponds to the white level of 100 IRE. The controller 40 controls the A/D converter 25 to process the video signal corresponding to the part A, and detects the output black level which is processed and outputted from the A/D converter 25. Then, the controller 40 compares the output black level with the standard black level and sets the offset value so that the output black level is equal to the standard black level. In other words, if the output black level of the part A is lower than the standard black level, the controller 40 increases the offset value by '1'. Also, if the output black level of the part A is higher than the standard black level, the controller 40 decreases the offset value by '1'. The controller 40 repeats the foregoing steps.

Furthermore, the controller 40 controls the A/D converter 25 to process the video signal corresponding to the part B and detects the processed output white level. Then, the controller 40 compares the output white level with the standard white level and sets the gain value so that the output white level is equal to the standard white level. In other words, if the output white level of the part B is lower than the standard white level, the controller 40 increases the gain value by '1'. Also, if the output white level of the part B is higher than the standard white level, the controller 40 decreases the gain value by '1'. The controller 40 repeats the foregoing steps.

The controller 40 controls the A/D converter 25 to process the video signal based on the predetermined offset and gain values. Then, the controller 40 compares the processed output black level with the standard black level so as to determine whether the video signal has the value of 7.5 IRE or not. In this case, the controller 40 controls the A/D converter 25 to process the video signal corresponding to the beginning of a color signal block and compares the processed output black level with the standard black level.

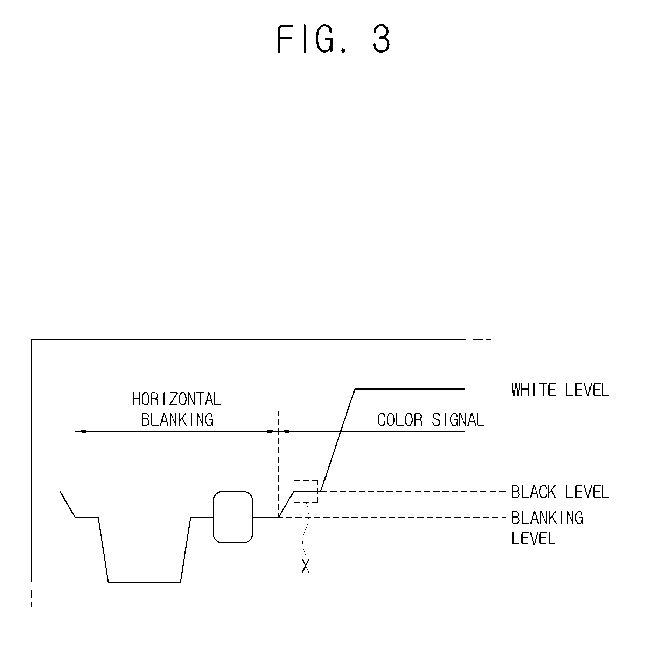

Herein, the controller 40 is described by referring to FIG. 3 as follows. As shown in FIG. 3, the composite video signal may comprise a horizontal blanking block and a color signal block. The video signal displayed on the display part 30 corresponding to the color signal block may be displayed not black and white but color.

The controller 40 sets a time block when the color signal block begins as a determining block (X). Then, the controller 40 determines whether the standard black level is equal to the output black level which is a data value outputted from the A/D converter 25 in the determining block. Here, if the output black level is equal to the standard black level, the black level is equal to the blank level so the video signal does not have the value of 7.5 IRE. Accordingly, the video signal is processed based on the predetermined offset value.

However, if the output black level is not equal to the standard black level, the inputted video signal has the value of 7.5 IRE so that the controller compensates the offset value. Then, the video signal is processed based on the compensated offset value.

Furthermore, the controller 40 compares the standard black level with the output black level of the determining block whenever a channel corresponding to the video signal inputted through the signal input part 10 is changed, the format of the video signal inputted from an external apparatus is changed, or a resolution is changed. Next, the controller 40 compensates the offset value of the A/D converter 25 based on the result of comparison.

According to the foregoing processes, it is determined whether the inputted video signal has a value of 7.5 IRE or not. Furthermore, because the video signal is processed according to the presence or absence of the video signal with a value of 7.5 IRE, the contrast ratio can be exactly reproduced and/or the image is not brighter or darker than normal.

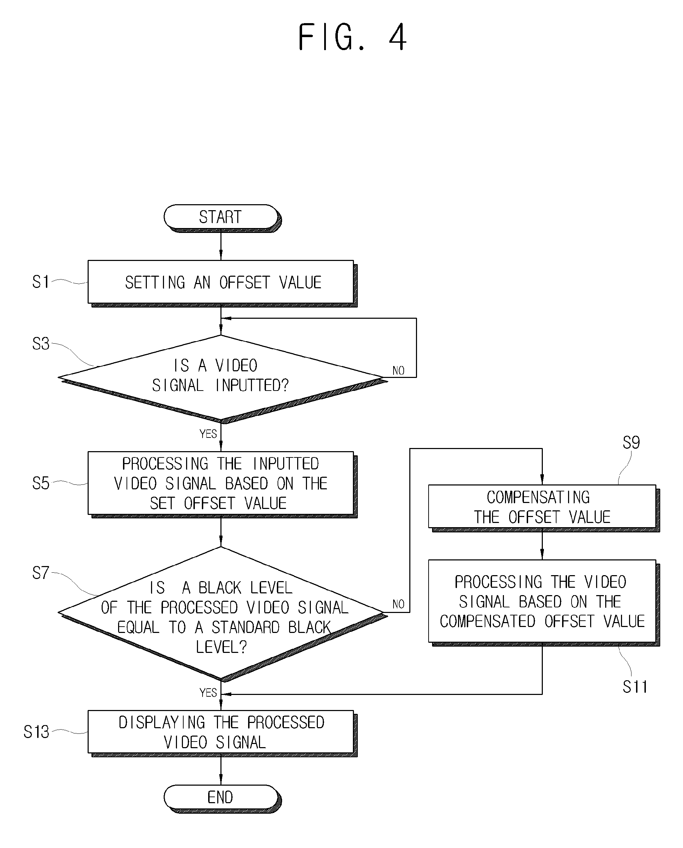

As shown in FIG. 4, the controller 40 sets the offset value and the gain value of the A/D converter 25 in the signal processor 20 based on the standard black level and the standard white level at operation S1.

Then, if the video signal is inputted at operation S3, the video signal is processed based on the predetermined offset value of the A/D converter 25 at operation S5. As described above, the A/D converter 25 processes the video signal which corresponds to the time block when the color signal begins.

Next, the controller 40 determines whether the standard black level is equal to the output black level of the processed video signal at operation S7.

If the output black level is determined to be equal to the standard black level at operation S7, the video signal is processed and displayed according to the predetermined offset value at operation S13.

If the output black level is determined not to be equal to the standard black level at operation S7, the controller 40 compensates the offset value so that the output black level is equal to the standard black level at operation S9.

Then, the video signal is processed based on the compensated offset value at operation S11, and the processed video signal is displayed thereon at operation S13.

According to the foregoing operations, the present invention may determine whether the inputted video signal has a value of 7.5 IRE or not. Therefore, the contrast ratio can be exactly reproduced and the image is not brighter or darker because the video signal is processed according to the presence or absence of the video signal with a value of 7.5 IRE. Also, although the value of the IRE is not fixed, an image with a fixed brightness level can be displayed.

The display apparatus and control method thereof according to the exemplary embodiments of the present invention correctly determine whether or not the inputted video signal has a value of 7.5 IRE.

Also, the exemplary embodiments of the present invention provide the display apparatus and control method thereof in which the contrast ratio can be exactly reproduced and the image having a fixed brightness level is displayed because the video signal is processed according to the presence or absence of the video signal with a value of 7.5 IRE.

Although a few exemplary embodiments of the present invention have been shown and described, it will be appreciated by those skilled in the art that changes may be made in these embodiments without departing from the principles and spirit of the invention, the scope of which is defined in the appended claims and their equivalents.

## Claims

1. A display apparatus, comprising:
a signal input part which receives a video signal;
a signal processor which processes the video signal inputted through the signal input part according to a predetermined offset value;
a controller which compensates the offset value of the signal processor to make an output black level equal to a standard black level if the output black level is not equal to the standard black level.

2. The display apparatus according to claim 1, wherein the controller sets a determining block corresponding to a time block when a color signal in the video signal begins, compares the standard black level with an output black level outputted from the determining block, and compensates the offset value of the signal processor based on a result of comparing the output black level with the standard black level.

3. The display apparatus according to claim 2, wherein the signal processor comprises an A/D converter and the controller compensates an offset value of the A/D converter.

4. The display apparatus according to claim 3, wherein the controller controls the signal processor to process a predetermined test video signal, sets the offset value of the A/D converter so that the output black level of the processed test video signal is equal to the standard black level.

5. A control method of a display apparatus comprising:
setting an offset value, and processing an inputted video signal according to the set offset value; and
compensating the offset value so that an output black level is equal to a standard black level if the output black level is not equal to the standard black level on the basis of a comparison of the output black level and the standard black level.

6. The control method according to claim 5, further comprising: comparing the standard black level with the output black level of the processed video signal to determine whether the standard black level is equal to the output black level of the processed video signal.

7. The control method according to claim 5, wherein compensating the offset value comprises setting a determining block corresponding to a time block when a color signal in the video signal begins, comparing the standard black level with an output black level outputted from the determining block, and compensating the offset value based on a result of the comparison.

8. The control method according to claim 7, wherein setting the offset value comprises processing a predetermined test video signal, and setting the offset value so that the standard black level is equal to the processed output black level of the test video signal.
